# EUROPEAN PATENT SPECIFICATION

(11) **EP 3 298 019 B1**
(45) Date of publication and mention of the grant of the patent: **12.02.2020**
(21) Application number: 16796876.7
(22) Date of filing: 01.04.2016
(51) Int. Cl.: C07F 7/14, B01J 23/36, B01J 23/745, B01J 23/755, B01J 23/72

(54) **METHOD OF FORMING CYCLIC SILOXANE COMPOUNDS FROM ORGANODIHALOSILANES**
VERFAHREN ZUR HERSTELLUNG VON CYCLISCHEN SILOXANVERBINDUNGEN AUS ORGANODIHALOGENSILANEN
PROCÉDÉ DE FORMATION DE COMPOSÉS DE SILOXANE CYCLIQUE À PARTIR D'ORGANODIHALOGÉNOSILANES

(30) Priority: 20.05.2015 US 201562164087 P
(43) Date of publication of application: 28.03.2018
(73) Proprietor: Dow Silicones Corporation, Midland, MI 48686-0994 (US)
(72) Inventor: KATSOULIS, Dimitris, Midland, MI 48642 (US); LARSEN, Robert, Thomas, Midland, MI 48642 (US); MCLAUGHLIN, Matthew, J., Midland, MI 48642 (US); PUSHKAREV, Vladimir, Midland, MI 48642 (US)
(74) Representative: Murgitroyd & Company
(86) International application number: PCT/US2016/025470
(87) International publication number: WO 2016/186739

(56) References cited:
- US-A- 2 737 506
- US-A- 3 110 720
- US-A- 3 398 173
- US-A1- 2013 284 973
- US-B2- 7 655 206

## Description

### CROSS REFERENCE TO RELATED APPLICATIONS

### TECHNICAL FIELD

A method is capable of forming cyclic siloxane compounds from organodichlorosilanes in the presence of a transition metal on cerium (IV) oxide. The method produces desirable quantities of cyclic trisiloxane compounds.

### BACKGROUND

Cyclic siloxane compounds, such as cyclic trisiloxane compounds, cyclic tetrasiloxane compounds, and cyclic pentasiloxane compounds, are useful as reactants for production of siloxane elastomers. Siloxane elastomers generally have a desirable combination of properties, such as excellent high temperature and weather stability, low temperature flexibility, high compressibility, high electrical resistivity, low dielectric loss, high gas permeability, as well as being odorless. Because of these properties, siloxane elastomers are widely used in industrial and consumer product applications. Furthermore, octamethylcyclotetrasiloxane (D₄) and decamethylcyclopentasiloxane (D₅) offer desirable properties to the personal care market place. These cyclosiloxanes along with some other low molecular weight linear siloxanes offer superior wetting properties combined with a volatility profile that make them useful in the delivery of a variety of personal care products ranging from antiperspirants to shampoo to skin lotions. There is an industry need to produce cyclic siloxane compounds such as cyclic trisiloxane compounds, *e.g.,* hexamethylcyclotrisiloxane (D₃).

### SUMMARY

The method described herein forms a product comprising a cyclic siloxane compound. The method comprises: 1) combining (a) an organodihalosilane, optionally (b) hydrogen gas, and (c) a transition metal on cerium(IV) oxide catalyst, in a reactor at a temperature of at least 200°C to form the product. The (a) organodihalosilane has formula R¹₂SiX₂ , where each R¹ is independently a hydrogen atom, a hydrocarbyl group, or a halogenated hydrocarbyl group; and each X is independently a halogen atom.

### DETAILED DESCRIPTION

The method described herein produces a product comprising cyclic siloxane compounds. At least a portion of the cyclic siloxane compounds in the product may include cyclic trisiloxane compounds, which are highly strained and typically less stable and more difficult to synthesize than cyclic siloxane compounds with more than three silicon atoms per molecule, such as cyclic tetrasiloxane compounds and cyclic pentasiloxane compounds.

The cyclic siloxane compound in the product may comprise one or more species, each independently having the formula (R¹₂SiO)ₙ, where each R¹ is independently a hydrogen atom, a hydrocarbyl group, or a halogenated hydrocarbyl group, and subscript n is at least 3. Alternatively, the hydrocarbyl groups for R¹ may be independently an alkyl group of 1 to 6 carbon atoms, an alkenyl group of 1 to 6 carbon atoms, or an aryl group of 6 to 10 carbon atoms. Alternatively, the alkyl group may have 1 to 4 carbon atoms. Alternatively, the alkenyl group may have 1 to 4 carbon atoms. Alternatively, the aryl group may have 6 to 8 carbon atoms. Alternatively, the alkyl group may be methyl or ethyl, alternatively each alkyl group may be methyl. Alternatively, the alkenyl group may be vinyl or allyl; alternatively, each alkenyl group may be vinyl. Alternatively, each aryl group may be phenyl, tolyl or xylyl; alternatively, each aryl group may be phenyl. The halogenated hydrocarbyl groups for R¹ may be any hydrocarbyl group described above where one or more hydrogen atoms bonded to a carbon atom have been formally replaced with a halogen atom. Halogenated hydrocarbon groups include haloalkyl groups and haloalkenyl groups. Haloalkyl groups include fluorinated alkyl groups such as trifluoromethyl (CF₃), fluoromethyl, trifluoroethyl, 2-fluoropropyl, 3,3,3-trifluoropropyl, 4,4,4-trifluorobutyl, 4,4,4,3,3-pentafluorobutyl, 5,5,5,4,4,3,3-heptafluoropentyl, 6,6,6,5,5,4,4,3,3-nonafluorohexyl, and 8,8,8,7,7-pentafluorooctyl; and chlorinated alkyl groups such as chloromethyl and 3-chloropropyl; and halogenated cycloalkyl groups such as fluorinated cycloalkyl groups, *e.g.,* 2,2-difluorocyclopropyl, 2,3-difluorocyclobutyl, 3,4-difluorocyclohexyl, and 3,4-difluoro-5-methylcycloheptyl; and chlorinated cycloalkyl groups such as 2,2-dichlorocyclopropyl, 2,3-dichlorocyclopentyl. Haloalkenyl groups include allyl chloride. Each X is independently a halogen atom, as described above. The halogen atom may be selected from chlorine, bromine or iodine; alternatively chlorine or bromine; alternatively chlorine or iodine. Alternatively, each X may be chlorine. Subscript n is at least 3, alternatively 3 to 9, alternatively 3 to 6, and alternatively 3. The product may optionally further comprise other silicon containing compounds, such as monomeric organohalosilanes and organo-halo-siloxanes. However, in one embodiment, the product comprises at least 40 mol% of a cyclic trisiloxane compound of formula (R¹₂SiO)₃. In this embodiment, one instance of R¹ may be methyl, and another instance of R¹ may be selected from hydrogen, methyl, vinyl, and phenyl. For example, the product may include (Me₂SiO)₃, (MeViSiO)₃, (MeHSiO)₃, or (MePhSiO)₃.

The product may further comprise additional silicon containing species. For example, in addition to the cyclic siloxane compounds, silanes of formula R¹_{b}SiX_{(4-b)} where subscript b is 0 to 3, and the silane differs from the organodihalosilane (a), and noncyclic polysiloxanes comprising units of formulae (R¹₃SiO)_{1/2}(R¹₂SiO)_{2/2}(R¹SiO)_{3/2} may be formed, where R¹ is as described above.

The method described above may further include the steps of providing each of (a) the organodihalosilane, optionally (b) hydrogen gas, and (c) the transition metal on cerium(IV) oxide catalyst before step 1). Alternatively, the method may further comprise treating the transition metal on cerium(IV) oxide catalyst before step 1). Treating may be performed, for example, by reducing with hydrogen before providing the organodihalosilane. Each of these starting materials (a), optionally (b), and (c) can be formed and/or provided by any convenient means. Typically, (a) the organodihalosilane is a liquid at room temperature. However, (a) the organodihalosilane may be provided as a gas when used in the method, *e.g.,* through heating to vaporize and/or through the use of a carrier gas. When a carrier gas is used, the carrier gas may be fed through a bubbler that includes (a) the organodihalosilane. The carrier gas may be an inert gas such as argon or nitrogen. Alternatively, the carrier gas may be hydrogen gas (H₂) when ingredient (b) is present. The carrier gas may be of any purity but typically has a purity of greater than 90%, alternatively greater than 95%, or alternatively greater than 99%. Inert gases and hydrogen gas is commercially available from, e.g., Praxair. Typically, (c) the transition metal on cerium (IV) oxide is solid and is provided as particles (*i.e.,* in particulate form). One or more of (a), optionally (b), and/or (c) may be provided in a single amount or may be provided in sequential steps, over a period of time, in a series of smaller amounts. In other words, (a), optionally (b), and (c) may be provided in a first amount and the method further comprise adding a supplemental amount of (a), optionally (b), and/or (c). Supplemental amounts of (a), optionally (b), and/or (c) may be added after the initial step 1) of providing and/or combining. Alternatively, the carrier gas may be excluded from step 1) of the method when a liquid organodihalosilane is vaporized at elevated temperatures and the vapor is delivered into the reactor through flow lines which are heated to avoid condensation of the vapor back to liquid. In this embodiment, the vapor is self-carrying.

The organodihalosilane, (a), has formula R¹₂SiX₂ , where each R¹ is independently a hydrogen atom, a hydrocarbyl group, or a halogenated hydrocarbyl group, as described above. The organodihalosilane is exemplified by methyldichlorosilane (MeHSiCl₂), dimethyldichlorosilane (Me₂SiCl₂), methylvinyldichlorosilane (MeViSiCl₂), methylphenyldichlorosilane (MePhSiCl₂), methyldibromosilane (MeHSiBr₂), dimethyldibromosilane (Me₂SiBr₂), methylvinyldibromosilane (MeViSiBr₂), methylphenyldibromosilane (MePhSiBr₂), methyldiiodosilane (MeHSil₂), dimethyldiiodosilane (Me₂Sil₂), methylvinyldiiodosilane (MeViSil2), and methylphenyldiiodosilane (MePhSil₂). Alternatively, organodihalosilane may be selected from the group consisting of MeHSiCl₂, Me₂SiCl₂, MeViSiCl₂, and MePhSiCl₂.

In the method described herein, the product is typically formed in the presence of (c) the transition metal on cerium(IV) oxide also referred to as M/CeO₂, where M represents the transition metal. The transition metal (M) may be Rhenium (Re), Iron (Fe), Nickel (Ni) or Copper (Cu). Alternatively, the transition metal may be Re. Alternatively, the transition metal may be Fe. Alternatively, the transition metal may be Ni. Alternatively, the transition metal may be Cu. In other words, the cyclic trisiloxane compounds are formed in the presence of the (c) transition metal on cerium (IV) oxide.

The transition metal on cerium (IV) oxide acts as a catalyst for forming the product. The transition metal is typically disposed on the cerium (IV) oxide, which acts as a solid support for the transition metal. The cerium(IV) oxide may lose oxygen atoms during formation of the product, but can be regenerated by exposure of cerium(III) oxide to diatomic oxygen (O₂) (or atmospheric air) to re-gain an oxygen atom (and reform cerium(IV) oxide), thereby regenerating the catalyst. In addition, any cerium oxychloride (CeOCI) that is produced during formation of the product may also lose chlorine atoms to reform cerium (IV) oxide and also regenerate the catalyst.

The transition metal on cerium (IV) oxide may be formed by any method known in the art. In one embodiment, the transition metal on cerium (IV) oxide is formed by dissolving a transition metal halide, such as ReCl₃, in isopropyl alcohol to form a solution. The solution is then added to CeO₂ powder by an incipient wetness technique. The powder is then vacuum dried. Moreover, the particular amount or weight percent of the transition metal on the cerium (IV) oxide is not particularly limited. Typically, the transition metal is present in an amount of 0.01% to 10%, alternatively 0.1% to 5%, or alternatively 0.5% to 3%; based on weight of the cerium (IV) oxide. However, these ranges are exemplary, and not limiting. The weight percent of the transition metal on the cerium (IV) oxide may be any value or range of values, both whole and fractional, within those ranges and values described above.

The method may optionally further include a step of regenerating the cerium (IV) oxide. This may be performed by exposing cerium (III) to diatomic oxygen (O₂) and/or to atmospheric air to reform cerium (IV) oxide. Alternatively, this may be performed by treating the cerium oxychloride (CeOCI) such that it loses chlorine atoms to reform cerium (IV) oxide. These steps may occur sequentially or simultaneously and may occur in conjunction with each other or independently.

In the method described herein, (a), optionally (b), and (c) are combined under conditions sufficient to form a product containing a cyclic siloxane compound, in particular a cyclic trisiloxane compound. The temperature selected depends on various factors including the species of organodihalosilane selected for (a), however, the temperature may be at least 200°C. Alternatively, the temperature may range from 200 °C to 500 °C, alternatively 350 °C to 500 °C, and alternatively 350 °C to 450 °C.

The reactor may operate in a continuous, semi-continuous, or batch mode or in a combination of modes. Alternatively, two or more reactors can be used, each independently operating in a continuous, semi-continuous, or batch mode or its own combination of modes. In one example, a first reactor is used to react (a), optionally (b), and (c), and a second reactor is used to generate (and/or regenerate) the cerium (IV) oxide. In this example, one or both of these reactors can be operated in a continuous mode. The particular type of reactor is not limited and may be exemplified by a fluidized bed reactor, a gas phase heterogeneous reactor, or a fixed bed reactor. The length and size of the reactor are also not particularly limited as the reactor may be a laboratory scale reactor or an industrial scale reactor.

In one embodiment, (c) the transition metal on cerium(IV) oxide is stationary, and (a) the organodihalosilane and when present (b) hydrogen gas are passed through and/or over (c) the transition metal on cerium(IV)oxide. In laboratory scale, (a) the organodihalosilane and/or carrier gas or (b) hydrogen gas typically has a residence time in or over (c) the transition metal on cerium (IV) oxide of 0.1 seconds (s) to 10s, alternatively 0.5s to 10s, alternatively 0.5s to 9.5s, alternatively 1s to 8.5s, alternatively 1.5s to 8s, alternatively 2s to 7.5s, alternatively 3s to 7s, alternatively 3.5s to 6.5s, alternatively 4s to 6s, and alternatively 4.5s to 5.5s. An industrial scale reactor or reaction may utilize residence times in similar proportions from those described above or those proportions may be different. It is contemplated that (a) organodihalosilane and when present (b) hydrogen gas can react for a time of from minutes to hours. In other words, the entire reaction (and not any one particular residence time) typically occurs for a time of from minutes to hours. For example, the process may be performed, and (a), optionally (b), and (c) may react, for 1 minute (min) to 60 min, alternatively 1 min to 40 min, alternatively 1 min to 20 min, alternatively, 1 min to 24 hours (h), alternatively 1 h to 15 h, alternatively, 1h to 10 h, and alternatively 1h to 5h hours.

The pressure at which the method is performed can be sub-atmospheric, atmospheric, or super-atmospheric. For example, the pressure may range from greater than 0 kilopascals absolute (kPa) to 2000 kPa; alternatively 100 kPa to 1000 kPa; and alternatively 101 kPa to 800 kPa.

The method may optionally further comprise activating the catalyst before step 1). Activating the catalyst may be performed by heating the catalyst in the presence of a reducing agent, such as hydrogen, at a temperature greater than 200°C.

After step 1), the method may optionally further comprise regenerating the catalyst. Regenerating may be performed oxidation and reduction. For example, oxidation may be performed by heating the catalyst in the presence of an oxygen source (e.g., water or air) at a temperature of greater than 200°C, alternatively 400°C to 500 °C.

After step 1), the method may optionally further include one or more additional steps after step 1). The additional steps may comprise 2) recovering the cyclic siloxane compound from the product. The product may be removed from the reactor before recovering the cyclic siloxane compound. However, one or more of the cyclic siloxane compounds may be removed from the reactor independently from a remainder of the product. One or more of the cyclic siloxane compounds may be recovered from the product by any convenient means, including chromatography, distillation, sublimation, and/or stripping.

### EXAMPLES

### Reference Example A - Preparation of Re on CeO₂

Rhenium on cerium (IV) oxide was prepared by incipient wetness impregnation. Rhenium trichloride was dissolved in hydrochloric acid. This solution was added to the CeO₂ until it was just entirely wetted. The wet solid was placed under vacuum for two hours, then heated in an oven for 15 hours at 80°C. The sample (0.844 g, ReCl₃ on ceria, 6.3% Re) was loaded into a 6 mm O.D. quartz tube which was fitted into a steel tube flow reactor. The catalyst was reduced with 10 sccm H₂ at 400 °C for 1.5 hours, then at 500°C for 30 minutes. The hydrogen was delivered to the reactor using a Brooks SLA5850 mass flow controller. The heat was supplied by a Thermo Scientific Lindberg Blue Minimite 2.5 cm tube furnace.

### Example 1

The tube from Reference Example A was then heated at 500 °C. Methyldichlorosilane (MeHSiCl₂) was placed in a steel bubbler, and 10 sccm hydrogen was flowed through the bubbler to carry the hydrogen and MeHSiCl₂ vapor into the reactor. The effluent of the reactor was periodically sampled (once every 23 minutes) using a Vici 6-way valve with a 100 uL sample loop. Each sample was sent to an Agilent 7890 GC-MS with thermal conductivity detector for analysis. The reactor temperature was 500°C for 75 minutes (four GC-MS injections), then injections were taken with the reactor at 400 °C, 350°C, and 330°C. At 500 °C production of silsesquioxanes was favored, and the reactor effluent contained the following selectivities of silicon products: 57 mol% (MeSiO_{3/2})₆, 9 mol% (MeHSiO)₃(MeSiO_{3/2})₂, 4 mol% (MeSiO_{3/2})₈, 15 mol% (MeHSiO)₄, 10 mol% (Me₂SiO)₂(MeHSiO)₄. At 350 °C cyclic siloxane compounds were the primary products in the reactor effluent. The reactor effluent contained: 58 mol% (MeHSiO)₃, 25 mol% (MeHSiO)₄, 8 mol% (MeHSiO)₅. Conversion of MeHSiCl₂ was 100% for all injections except the last when the reactor was at 330 °C, where conversion dropped to 69%.

### Comparative Example 2

A reaction of MeHSiCl₂ was carried out according to the procedure described in Example 1. Cerium (IV) oxide that was not doped with any transition metal was used in place of catalyst (c). The temperature of the reactor was started at 200 °C and increased by 50 °C after each GC-MS injection. At 200°C to 300 °C, disiloxanes were the primary products in the reactor effluent. At 250 °C, the reactor effluent contained 34 mol% CIMeHSi-O-SiHMeCI, 32 mol% CIMeHSi-O-SiMeCl₂, and 28 mol% MeH₂SiCl. No cyclic trisiloxane was detected in the reactor effluent at any temperature.

### Example 3

The procedure described in Example 1 was repeated except using dimethyldichlorosilane (Me₂SiCl₂) as the organodihalosilane (a) and 2% Re on CeO₂ as catalyst (c). At 400°C the reactor effluent for the first 20 minutes of contained: 49 mol% (Me₂SiO)₃, 21 mol% Me₃SiCl, 14 mol% (Me₂SiO)₄, 7 mol% linear chlorosiloxanes, 4 mol% (Me₂SiO)₃(Me₂SiO_{3/2})₂, and 3 mol% (Me₂SiO)₄₋₆(Me₂SiO_{3/2})₂.

### Example 4

The procedure described in Example 1 was repeated except using methylvinyldichlorosilane (MeViSiCl₂) as the organodihalosilane (a) and 6.3% Re on CeO₂ as catalyst (c). The temperature in the reactor started at 200°C and was increased by 50 °C after each GC-MS injection up to 500 °C. A mixture of monomers, linear siloxanes, cyclic siloxanes and silalkylenes were produced at various selectivities depending on the temperature. At 350 °C the reactor effluent contained 39 mol% (MeViSiO)₃, 32 mol% EtMeSiCl₂, 12 mol% (MeViSiO)₄, 8 mol% MeSiCl₃, 4 mol% (MeViSiO)₅. At 500 °C the selectivities were 40 mol% EtMeSiCl₂, 31% CIMeViSi-O-SiViMeCl, 13 mol% MeSiCl₃, 5 mol% Cl(MeViSiO)₂SiMeViCl, 4 mol% (MeViSiO)₃, 3 mol% (MeViSiO)₄, and 3 mol% Cl₂MeSi-(CH₂)₂-SiMeCl₂.

### Example 5

The procedure described in Example 1 was repeated except using MeViSiCl₂ as the organodihalosilane (a) and 1.1% Fe on CeO₂ as the catalyst. A mixture of monomers, linear siloxanes, cyclic siloxanes and silalkylenes were produced at various selectivities depending on the temperature. At 350 °C the selectivities were 43% (MeViSiO)₃, 15% EtMeSiCl₂, 14% (OSiMeVi)₃(O_{3/2}SiMe)₂, 7% (OSiMeVi)₄(OSiMeCl).

### Example 6

The procedure described in Example 1 was repeated except using methylphenyldichlorosilane (MePhSiCl₂) as organodihalosilane (a), and 2% Re on cerium(IV) oxide as catalyst (c). The temperature in the reactor started at 200 °C and was increased by 50 °C after each GC-MS injection up to 500°C. A mixture of monomers, linear siloxanes, cyclic siloxanes and silsesquioxanes were produced at various selectivities depending on the temperature. At 250 °C the reactor effluent contained 79% PhSiCl₃ and 21% (MeSiO_{3/2})₆. At 350 °C product was 100% CIMePhSi-O-SiPhMeCl. At 450 °C the reactor effluent contained 90% cyclic (MePhSiO)₃ and 10% PhSiCl₃.

### Example 7

A reaction was carried out between dimethyldichlorosilane (Me₂SiCl₂) and 2 wt.% copper on cerium (IV) oxide. The Cu/CeO₂ was prepared with the same procedure as Reference Example A. The sample (0.600 g, CuCl₂ on ceria, 2.0 wt.% Cu) was loaded into the middle of a 12.7 mm O.D. quartz tube which was connected to the gas lines by fluorocarbon polymer compression fittings and mounted into the tube furnace. The catalyst was reduced under a flow of 5 sccm H₂ and 95 sccm Ar at 500 °C for 30 min, and then under a flow of 100 sccm of H₂ at the same temperature for 2 additional hours. Both H₂ and Ar were delivered to the reactor using the Brooks SLA5850 mass flow controllers. After completion of the reduction step, the catalyst temperature was lowered to 400 °C and the reaction was started by flowing 20 sccm H₂ through a steel bubbler filled with liquid dimethyldichlorosilane (Me₂SiCl₂) to carry the vapor to the reactor. During the reaction both the still bubbler with Me₂SiCl₂ and the reactor with the catalyst were maintained steady at room temperature (23 °C) and at 400 °C, respectively. The effluent of the reaction was samples every 10 minutes using the Vici 6-way valve - Agilent 7890 GC-MS on-line sample analysis system, similar to the one described in the Example 1. The duration of the reaction was 50 min (6 GC-MS injections). During the course of the reaction the Me₂SiCl₂ conversion peaked at 10 min at 37.2 mol.% and then steadily declined to 4.6 mol.% at 50 min. At the maximum of the Me₂SiCl₂ conversion the reaction product distribution was the following: 53 mol.% (Me₂SiO)₄, 21 mol.% (Me₂SiO)₃, 11 mol.% (Me₂SiO)₅, 5 mol. % (MeSiO_{3/2})₄, 3 mol.% Me₃SiCl, 2 mol.% MeSiCl₃, 2 mol.% (Me₂SiO)₆, and the remainder (3 mol.%) linear methylchlorosiloxanes, primarily Me₂ClSiOSiMe₂Cl.

### Example 8

A reaction of Me₂SiCl₂ and 2 wt.% nickel on cerium (IV) oxide was carried out with the same procedure outlined in Example 7. Unlike the Example 7, the peak Me₂SiCl₂ conversion (95 mol.%) with the 2 wt.% nickel on cerium(IV) oxide catalyst was observed at beginning of the reaction (first sampling) and the product distribution at this peak activity was the following: 36 mol.% (Me₂SiO)₄, 35 mol.% (Me₂SiO)₃, 11 mol.% (Me₂SiO)₅, 8 mol. % (MeSiO_{3/2})₄, 4 mol.% (Me₂SiO)₆, 2 mol. % (MeSiO_{3/2})₃, 1 mol.% Me₃SiCl, 1 mol.% MeSiCl₃, and the remainder (2 mol.%) linear methylchlorosiloxanes, primarily Me₂ClSiOSiMe₂Cl. The decline of the catalytic activity during the course of the reaction was less pronounced than in comparison with the experiment described in the Example 7. The Me₂SiCl₂ conversion at 50 min of reaction time with the Ni/CeO₂ catalyst was 54 mol.%.

### Example 9

A reaction of Me₂SiCl₂ and 2 wt.% iron on cerium (IV) oxide was carried out with the same procedure outlined in the Example 7 and 8. Similar with the Example 8, the peak Me₂SiCl₂ conversion (73 mol.%) with the 2 wt.% iron on cerium(IV) oxide catalyst was observed at beginning of the reaction (first sampling) and the product distribution at this peak activity was the following: 74 mol.% (Me₂SiO)₃, 12 mol.% (Me₂SiO)₄, 4 mol. % (MeSiO_{3/2})₄, 2 mol. % (MeSiO_{3/2})₃, 2 mol.% (Me₂SiO)₅, 2 mol.% Me₃SiCl, 2 mol.% MeSiCl₃, 1 mol.% (Me₂SiO)₆ and the remainder (1 mol.%) linear methylchlorosiloxanes, primarily Me₂ClSiOSiMe₂Cl.

### Example 10

The procedure described in Example 1 was repeated except using (trifluoropropyl)methyldichlorosilane [(F₃Pr)MeSiCl₂] as organodihalosilane (a), and 5 wt.% copper on cerium(IV) oxide as catalyst (c). The temperature in the reactor started at 150 °C and was increased by 50 °C after each GC-MS injection up to 500 °C. A mixture of monomers, linear siloxanes, cyclic siloxanes and silsesquioxanes were produced at various selectivities depending on the temperature. At 200 °C the reactor effluent contained 57% by area in the TCD analysis (F₃PrMeSiO)ₙ (where n = 3 to 6) cyclic compounds, 14% (F₃Pr)MeSiF₂, and 6% (F₃Pr)MeSiFCl. At 300 °C the reactor effluent contained 67% (F₃PrMeSiO)ₙ cyclic compounds, and 18% monomers [e.g., (F₃Pr)MeSiF₂].

### Comparative Example 11

A reaction of Me₂SiCl₂ and 2 wt.% rhenium on titanium oxide was carried out with the same procedure outlined in the Example 7, except the reactor temperature was 500°C. Conversion of Me₂SiCl₂ only reached 5 mol.% at the beginning of the reaction, then dropped off. No cyclic siloxane compounds were created; the product distribution in the first injection was the following: 52 mol.% Me₃SiCl, 11 mol.% MeSiCl₃, and 31 mol.% linear methylchlorosiloxanes. This comparative example shows that when a different support is used in place of cerium oxide, cyclic siloxane compounds did not form under the conditions tested.

### Example 12

The procedure described in Example 1 was repeated except using Me₂SiCl₂ as organodihalosilane (a), 1.1 wt.% iron on cerium(IV) oxide as catalyst (c), and argon was used as a carrier gas instead of hydrogen. The temperature in the reactor was kept at 400 °C throughout the reaction. The first injection onto the GC-MS at 5 minutes showed 99% conversion of the Me₂SiCl₂. Product selectivity was as follows: 51% (Me₂SiO)₃, 15% (Me₂SiO)₄, 4% (Me₂SiO)₅, 25% branched T-structures [e.g. (MeSiO_{3/2})₂(Me₂SiO)₃]. This example shows that cyclic siloxanes, including cyclic trisiloxane, can be formed using the method described herein without hydrogen. Reference Example B

Rhenium on cerium (IV) oxide was prepared by dissolving 0.1025 g ReCl₃ Sigma Aldrich, 99+%) in 8.8 mL of isopropyl alcohol to form a solution. The solution was then added to CeO₂ powder by an incipient wetness technique wherein enough solution was added to 2.0679 g CeO₂ (Sigma Aldrich, 99%) to just wet the entire mass of powder such that any more solution would not be taken up by the powder. The wet powder was then vacuum dried at 80 °C for 4 hours to yield a powder including 2 wt.% of rhenium on the cerium(IV) oxide powder.

After formation, 0.60 g of (c) the rhenium on cerium(IV) oxide powder was then loaded into a quartz glass tube and placed in a flow reactor and purged with H₂. Activation of the catalyst was performed with 100 sccm H₂ (controlled via Omega FMA 5500 mass flow controller) at 500°C for ∼2 hours (heated in a Lindberg/Blue Minimite 1" tube furnace).

### Comparative Example 13

Reaction was then initiated by bubbling 100 sccm of H₂ through a stainless steel bubbler containing methyltrichlorosilane (MeSiCl₃) instead of an organodihalosilane (a). The temperature in the bubbler was 23°C. The gas and vapor leaving the bubbler were passed into the reactor used in Reference Example B. The bubbler was designed with sufficient contact time such that the MeSiCl₃ vapor was in equilibrium with the gases leaving the bubbler, and as such, the flow rate of MeSiCl₃ leaving the bubbler could be determined by known thermodynamic relationships. The reactor effluent was periodically sampled over the course of 60 min by GC/GC-MS to monitor the amounts of various reaction products. The effluent of the reactor passed through an actuated 6-way valve (Vici) with constant 100 uL injection loop before being discarded.

Samples were taken of the reactor effluent by actuating the valve and a 100 uL sample passed directly into an injection port of a 7890A Agilent GC-MS for analysis with a split ratio at the injection port of 100:1. The GC included two 30 m SPB-Octyl columns (Supelco, 250 um inner diameter, 0.25 um thick film), which were disposed in parallel such that the sample was split evenly between the two columns. One column was connected to a thermal conductivity detector for quantification of the reaction products and the other column was connected to a mass spectrometer (Agilent 7895C MSD) for sensitive detection of trace products and positive identification of any products that formed. Instead of being heated in a GC oven, the columns were heated using an Agilent LTM module, i.e., the columns were wrapped with heating elements and thermocouples such that they were precisely and rapidly ramped to desired temperatures. This low thermal mass system allowed rapid analysis (7 - 10 minutes) between sample injections. The reactor effluent contained no cyclic trisiloxane compounds.

For purposes of this application, "°C" means degrees Celsius, "cm" means centimeters, "GC" means gas chromatograph, "GC-MS" means gas chromatograph - mass spectrometer, "m" means meters, "Me" means methyl, "mm" means millimeters, "O.D." means outside diameter, "sccm" means standard cubic centimeters per minute, "uL" means microliters, and "um" means micrometers. All amounts, ratios, and percentages recited in the specification are by weight, unless otherwise indicated.

All ratios, percentages, and other amounts are by weight, unless otherwise indicated. The articles 'a', 'an', and 'the' each refer to one or more, unless otherwise indicated by the context of the specification.

The disclosure of ranges includes the range itself and also anything subsumed therein, as well as endpoints. For example, disclosure of a range of 2.0 to 4.0 includes not only the range of 2.0 to 4.0, but also 2.1, 2.3, 3.4, 3.5, and 4.0 individually, as well as any other number subsumed in the range. Furthermore, disclosure of a range of, for example, 2.0 to 4.0 includes the subsets of, for example, 2.1 to 3.5, 2.3 to 3.4, 2.6 to 3.7, and 3.8 to 4.0, as well as any other subset subsumed in the range.

With respect to any Markush groups relied upon herein for describing particular features or aspects of various embodiments, it is to be appreciated that different, special, and/or unexpected results may be obtained from each member of the respective Markush group independent from all other Markush members. Each member of a Markush group may be relied upon individually and or in combination with any other member or members of the group, and each member provides adequate support for specific embodiments within the scope of the appended claims. For example, disclosure of the Markush group: alkyl, aryl, and carbocyclic includes the member alkyl individually; the subgroup alkyl and aryl; and any other individual member and subgroup subsumed therein.

It is also to be understood that any ranges and subranges relied upon in describing various embodiments of the present disclosure independently and collectively fall within the scope of the appended claims, and are understood to describe and contemplate all ranges including whole and/or fractional values therein, even if such values are not expressly written herein. The enumerated ranges and subranges sufficiently describe and enable various embodiments of the present disclosure, and such ranges and subranges may be further delineated into relevant halves, thirds, quarters, fifths, and so on. As just one example, a range "of 350 to 500" may be further delineated into a lower third, *i.e.,* from 350 to 400, a middle third, *i.e.,* from 400 to 450, and an upper third, *i.e.,* from 450 to 500, which individually and collectively are within the scope of the appended claims, and may be relied upon individually and/or collectively and provide adequate support for specific embodiments within the scope of the appended claims. In addition, with respect to the language which defines or modifies a range, such as "at least," "greater than," "less than," "no more than," and the like, it is to be understood that such language includes subranges and/or an upper or lower limit. As another example, a range of "at least 0.1%" inherently includes a subrange from 0.1% to 35%, a subrange from 10% to 25%, a subrange from 23% to 30%, and so on, and each subrange may be relied upon individually and/or collectively and provides adequate support for specific embodiments within the scope of the appended claims. Finally, an individual number within a disclosed range may be relied upon and provides adequate support for specific embodiments within the scope of the appended claims. For example, a range of "1 to 9" includes various individual integers, such as 3, as well as individual numbers including a decimal point (or fraction), such as 4.1, which may be relied upon and provide adequate support for specific embodiments within the scope of the appended claims.

The subject matter of all combinations of independent and dependent claims, both singly and multiply dependent, is expressly contemplated but is not described in detail for the sake of brevity. The disclosure has been described in an illustrative manner, and it is to be understood that the terminology which has been used is intended to be in the nature of words of description rather than of limitation.

### Embodiments of the Invention

A first embodiment is a method for forming a product comprising a cyclic siloxane compound, where the method comprises:
1) combining, at a temperature of at least 200°C,
   (a) an organodihalosilane of formula R¹₂SiX₂, where each R¹ is independently a hydrogen atom, a halogenated hydrocarbyl group or a hydrocarbyl group; and each X is independently a halogen atom; and
   (c) a transition metal on cerium (IV) oxide catalyst, where the transition metal is selected from Rhenium, Iron, Nickel, and Copper;
thereby producing the product comprising the cyclic siloxane compound.

A second embodiment is the method of the first embodiment, further comprising treating (c) the transition metal on ceirum (IV) oxide catalyst with hydrogen before step 1).

A third embodiment is the method of the first embodiment, further comprising adding (b) hydrogen gas during step 1).

A fourth embodiment is the method of the first embodiment, where the cyclic siloxane compound has formula (R¹₂SiO)ₙ where subscript n is 3 to 6.

A fifth embodiment is the method of the first embodiment, where each R¹ is independently hydrogen, alkyl, fluoroalkyl, alkenyl, or aryl; and n is 3 or 4.

A sixth embodiment is the method of the first embodiment, where one instance of R¹ is methyl; and another instance of R¹ is hydrogen, trifluoropropyl, methyl, vinyl, or phenyl; and n is 3.

A seventh embodiment is the method of the first embodiment, where the temperature is 200°C to 500 °C.

An eighth embodiment is the method of the first embodiment,, further comprising:
reactivating the catalyst after step 1) is completed.

A ninth embodiment, is the method of the eighth embodiment, where reactivating occurs in a different reactor than a reactor for performing step 1).

A tenth embodiment is the method of the first embodiment, further comprising: adding an additional amount of the rhenium on cerium (IV) oxide after step 1).

An eleventh embodiment is the method of the first embodiment, where step 1) is performed continuously in a fluidized bed reactor.

A twelvth embodiment is the method of the eleventh embodiment, where the reactor is operated at a pressure that exceeds atmospheric pressure.

A thirteenth embodiment is the method of the twelvth embodiment, further comprising:
removing the product from the reactor.

A fourteenth embodiment is the method of the first embodiment, further comprising recovering the cyclic siloxane compound from the product.

## Claims

1. A method for forming a product comprising a cyclic siloxane compound, where the method comprises:
1) combining, at a temperature of at least 200°C,
(a) an organodihalosilane of formula R¹₂SiX₂, where each R¹ is independently a hydrogen atom, a halogenated hydrocarbyl group or a hydrocarbyl group; and each X is independently a halogen atom; and
(c) a transition metal on cerium (IV) oxide catalyst, where the transition metal is selected from Rhenium, Iron, Nickel, and Copper;
thereby producing the product comprising the cyclic siloxane compound.

2. The method of claim 1, further comprising treating (c) the transition metal on cerium (IV) oxide catalyst with hydrogen before step 1).

3. The method of claim 1 or claim 2, further comprising adding (b) hydrogen gas during step 1).

4. The method of any one of claims 1 to 3, where the cyclic siloxane compound has formula (R¹₂SiO)ₙ where subscript n is 3 to 6.

5. The method of any one of claims 1 to 4, where each R¹ is independently hydrogen, alkyl, fluoroalkyl, alkenyl, or aryl; and n is 3 or 4.

6. The method of any one of claims 1 to 5, where one instance of R¹ is methyl; and another instance of R¹ is hydrogen, trifluoropropyl, methyl, vinyl, or phenyl; and n is 3.

7. The method of any one of the preceding claims, where the temperature is 200°C to 500°C.

8. The method of any one of the preceding claims, further comprising: reactivating the catalyst after step 1) is completed.

9. The method of claim 8, where reactivating occurs in a different reactor than a reactor for performing step 1).

10. The method of any one of the preceding claims, further comprising: adding an additional amount of the rhenium on cerium (IV) oxide after step 1).

11. The method of any one of the preceding claims, where step 1) is performed continuously in a fluidized bed reactor.

12. The method of claim 11, where the reactor is operated at a pressure that exceeds atmospheric pressure.

13. The method of claim 11 or claim 12, further comprising: removing the product from the reactor.

14. The method of any one of claims 1 to 13, further comprising recovering the cyclic siloxane compound from the product.

## Patentansprüche

1. Ein Verfahren zum Bilden eines Produkts, das eine cyclische Siloxanverbindung beinhaltet, wobei das Verfahren Folgendes beinhaltet:
1) Kombinieren, bei einer Temperatur von mindestens 200 °C,
(a) eines Organodihalogensilans der Formel R¹₂SiX₂, wobei jedes R¹ unabhängig ein Wasserstoffatom, eine halogenierte Hydrocarbylgruppe oder eine Hydrocarbylgruppe ist; und jedes X unabhängig ein Halogenatom ist; und
(c) eines Übergangsmetall-auf-Cer(IV)oxid-Katalysators, wobei das Übergangsmetall aus Rhenium, Eisen, Nickel und Kupfer ausgewählt ist;
wodurch das Produkt hergestellt wird, das die cyclische Siloxanverbindung beinhaltet.

2. Verfahren gemäß Anspruch 1, ferner beinhaltend das Behandeln (c) des Übergangsmetall-auf-Cer(IV)oxid-Katalysators mit Wasserstoff vor Schritt 1).

3. Verfahren gemäß Anspruch 1 oder Anspruch 2, ferner beinhaltend das Hinzufügen von (b) Wasserstoffgas während Schritt 1).

4. Verfahren gemäß einem der Ansprüche 1 bis 3, wobei die cyclische Siloxanverbindung die Formel (R¹₂SiO)ₙ aufweist, wobei der Index n 3 bis 6 ist.

5. Verfahren gemäß einem der Ansprüche 1 bis 4, wobei jedes R¹ unabhängig Wasserstoff, Alkyl, Fluoralkyl, Alkenyl oder Aryl ist; und n 3 oder 4 ist.

6. Verfahren gemäß einem der Ansprüche 1 bis 5, wobei eine Variante von R¹ Methyl ist;
und eine andere Variante von R¹ Wasserstoff, Trifluorpropyl, Methyl, Vinyl oder Phenyl ist; und n 3 ist.

7. Verfahren gemäß einem der vorhergehenden Ansprüche, wobei die Temperatur 200 °C bis 500 °C beträgt.

8. Verfahren gemäß einem der vorhergehenden Ansprüche, ferner beinhaltend: Reaktivieren des Katalysators, nachdem Schritt 1) abgeschlossen ist.

9. Verfahren gemäß Anspruch 8, wobei das Reaktivieren in einem anderen Reaktor als einem Reaktor zum Ausführen von Schritt 1) erfolgt.

10. Verfahren gemäß einem der vorhergehenden Ansprüche, ferner beinhaltend: Hinzufügen einer zusätzlichen Menge des Rhenium-auf-Cer(IV)oxids nach Schritt 1).

11. Verfahren gemäß einem der vorhergehenden Ansprüche, wobei Schritt 1) kontinuierlich in einem Wirbelbettreaktor ausgeführt wird.

12. Verfahren gemäß Anspruch 11, wobei der Reaktor mit einem Druck betrieben wird, der Atmosphärendruck übersteigt.

13. Verfahren gemäß Anspruch 11 oder Anspruch 12, ferner beinhaltend: Entfernen des Produkts aus dem Reaktor.

14. Verfahren gemäß einem der Ansprüche 1 bis 13, ferner beinhaltend das Gewinnen der cyclischen Siloxanverbindung aus dem Produkt.

## Revendications

1. Un procédé pour la formation d'un produit comprenant un composé siloxane cyclique, où le procédé comprend :
1) la combinaison, à une température d'au moins 200 °C,
(a) d'un organodihalogénosilane de formule R¹₂SiX₂, où chaque R¹ est indépendamment un atome d'hydrogène, un groupe hydrocarbyle halogéné ou un groupe hydrocarbyle ; et chaque X est indépendamment un atome d'halogène ; et
(c) d'un catalyseur métal de transition sur oxyde de cérium (IV), où le métal de transition est sélectionné parmi le rhénium, le fer, le nickel et le cuivre ;
produisant ainsi le produit comprenant le composé siloxane cyclique.

2. Le procédé de la revendication 1, comprenant en outre le traitement (c) du catalyseur métal de transition sur oxyde de cérium (IV) avec de l'hydrogène avant l'étape 1).

3. Le procédé de la revendication 1 ou de la revendication 2, comprenant en outre l'ajout (b) d'hydrogène gazeux pendant l'étape 1).

4. Le procédé de n'importe laquelle des revendications 1 à 3, où le composé siloxane cyclique a la formule (R¹₂SiO)ₙ où l'indice n vaut de 3 à 6.

5. Le procédé de n'importe laquelle des revendications 1 à 4, où chaque R¹ est indépendamment l'hydrogène, un alkyle, un fluoroalkyle, un alcényle ou un aryle ; et n vaut 3 ou 4.

6. Le procédé de n'importe laquelle des revendications 1 à 5, où une instance de R¹ est un méthyle ; et une autre instance de R¹ est l'hydrogène, un trifluoropropyle, un méthyle, un vinyle ou un phényle ; et n vaut 3.

7. Le procédé de n'importe laquelle des revendications précédentes, où la température va de 200 °C à 500 °C.

8. Le procédé de n'importe laquelle des revendications précédentes, comprenant en outre :
la réactivation du catalyseur après que l'étape 1) est terminée.

9. Le procédé de la revendication 8, où la réactivation se produit dans un réacteur différent d'un réacteur pour la réalisation de l'étape 1).

10. Le procédé de n'importe laquelle des revendications précédentes, comprenant en outre :
l'ajout d'une quantité supplémentaire du rhénium sur oxyde de cérium (IV) après l'étape 1).

11. Le procédé de n'importe laquelle des revendications précédentes, où l'étape 1) est réalisée en continu dans un réacteur à lit fluidisé.

12. Le procédé de la revendication 11, où on fait fonctionner le réacteur à une pression qui dépasse la pression atmosphérique.

13. Le procédé de la revendication 11 ou de la revendication 12, comprenant en outre : le retrait du produit du réacteur.

14. Le procédé de n'importe laquelle des revendications 1 à 13, comprenant en outre la récupération du composé siloxane cyclique à partir du produit.
